(19)

Europäisches
Patentamt
European
Patent Office
Office européen
des brevets

(11) **EP 4 134 875 A1**

(12) **EUROPEAN PATENT APPLICATION**

(43) Date of publication:
 **15.02.2023 Bulletin 2023/07**

(21) Application number: **21190617.7**

(22) Date of filing: **10.08.2021**

(51) International Patent Classification (IPC):
 **G06N 3/063** $^{(2000.01)}$   **G06N 3/04** $^{(2000.01)}$
 **G06F 21/55** $^{(2013.01)}$

(52) Cooperative Patent Classification (CPC):
 **G06N 3/063; G06F 21/44; G06F 21/55;**
 G06F 2221/034; G06N 3/045

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **KH MA MD TN**

(71) Applicant: **Continental Autonomous Mobility
 Germany GmbH
 85057 Ingolstadt (DE)**

(72) Inventor: **Ganguly, Shaumik
 81739 München (DE)**

(74) Representative: **Continental Corporation
 c/o Continental Automotive GmbH
 Intellectual Property
 Postfach 83 01 16
 81701 München (DE)**

(54) **METHOD AND APPARATUS FOR DIAGNOSTIC COVERAGE FOR AI HARDWARE ACCELERATORS**

(57) Systems, apparatuses, and methods for implementing a safety processor framework for safety-critical Convolutional Neural Networks inference applications and related convolution and matrix multiplication-based systems are disclosed. An example system includes a safety-critical inference application, a checker network, and an inference accelerator engine. The checker network receives input data and applies a checker network specification for a specified inference application. The checker network is verified by comparing the results with expected results. A mismatch in the results indicates faulty processing hardware.

Fig. 3

## Description

An emerging technology field is machine learning or Artificial Intelligence (AI), with a neural network being one type of a machine learning model. Artificial Intelligence is widely used in various automotive applications, more specifically Convolutional Neural Networks (CNN) are found to provide significant accuracy improvements compared to traditional algorithms for Perception and other applications. Neural networks such as CNN's have demonstrated excellent performance at tasks such as hand-written digit classification and face detection. Additionally, neural networks have also shown promise for performing well in other, more challenging, visual classification tasks. Other applications for neural networks include speech recognition, language modeling, sentiment analysis, text prediction, and others.

However, they are often restricted to non-safety-critical functions, owing to a dearth of AI Hardware and Software that could fulfill safety requirements. Most AI Accelerators still do not claim to fulfill any ASIL level independently, some claim to qualify "most stringent safety compliance standards" with plans to reach ASIL D compliance in the future. Evidently the field of safe AI acceleration is still in its nascent stages.

In a typical deployment of a machine learning algorithm, a software application supplies a neural network to an inference accelerator hardware engine. When the inference accelerator is operating in a safety-critical environment, it is desired to monitor the inference accelerator to check for abnormal behavior. A typical implementation for monitoring the inference accelerator inserts monitoring logic into the inference accelerator processing hardware sub-blocks. For example, a machine check architecture is a mechanism whereby monitoring logic in the processing hardware checks for abnormal behavior.

In order to fulfill the required diagnostic coverage to detect and protect against random hardware faults, many existing popular fault detection and handling techniques used for microcontrollers are also applicable and are used for AI accelerators. However, these techniques also have disadvantages.

A Lockstep Core method (US5915082A, WO2011117155A1), with two hardware resources running the same function and comparing results, is a widely used approach in automotive Electronic Control Units (ECU's) to achieve high diagnostic coverage. This approach can potentially claim a diagnostic coverage of 100% of compute elements for single point faults; however, it requires doubling the hardware resources, which has an adverse impact on the cost, space and power budget.

Use of double hardware resources as part of the Lockstep approach may add cost, area and power consumption, introducing performance inefficiencies, thus limiting its use to only high-end products with enough performance and power margin to compensate these shortcomings.

Likewise, use of built-in self-test (BIST) together with functional logic may introduce latency overheads in addition to the required runtime for the self-tests, as it needs to safely pause, store intermediate results of the function application to run the self-test and then restart the function afterwards, thereby causing additional performance degradation. Retention of intermediate results of the application while performing the self-test is another major concern. This approach also requires additional circuitry to be implemented.

Safety methods are required for any functionality which can be mission-critical or safety critical. Functional safety standards aim to address possible hazards caused by the malfunctioning behavior of electronic and electrical systems in vehicles including both the functional safety of Electrical and Electronic systems as well as that of systems as a whole or of their mechanical subsystems.

Standards such as IEC 61508 or ISO 26262 are risk-based safety standards, where the risk of hazardous operational situations is qualitatively assessed and safety measures are defined to avoid or control systematic failures and to detect or control random hardware failures, or mitigate their effects. More details on the state of the art can be derived from the Functional Safety Standard of ISO26262.

The proposed approach may integrate additional compute elements or nodes for functional safety verification or checking. The additional nodes in the NN model might be referred to as "Safety Nodes", which in implementations are added to the trained NN model. Additionally, sample input data and expected results are provided. The sample or checker input data, and the expected "golden" results or checker results are provided for functional verification of the hardware. The checker results should match the expected results each time the checker network is used to process the checker input data.

The checker network or Safety Nodes in implementations are simply the computation types that exist in the NN model, eg: convolution, pooling, ReLU (Rectified Linear Unit), etc. For example, a MAC operator of the accelerator may be used for millions of operations of the NN model per input image, thus a Safety Node in certain implementations may include additional operation(s) to verify the MAC operator with known input data, and compare the result with a known output. Similarly, other operators may be included in the checker network, to perform safety checks of all possible hardware elements that are being used by the NN model. It should be noted that the size and dimensionality of the Safety Nodes and input data is expected to increase with increase in complexity of the NN model and the expected diagnostic coverage of the hardware. It is important to consider the diagnostic coverage which can be achieved by a certain set of input data as processed by the checker network, when determining what the checker input data should be.

The inventive approach as described in greater detail below provides improvements to reduce the added cost of additional hardware resources or processing time needed to achieve high coverage. Another improvement concerns the reduction of additional runtime overheads, which might be due to switching between the function application and self-test or software-based safety tests at runtime, without compromising on diagnostic coverage. Likewise, the inventive approach can minimize or eliminate a potential break in the flow of operation which might be required both in the case of BIST and of Software Test Libraries (STL). Finally, the inventive approach may offer a deterministic diagnostic coverage of AI hardware accelerators, as an improvement over accelerators which do not include the functionality to provide deterministic diagnostic coverage.

One advantage of various embodiments as described in greater detail below includes the minimization of additional hardware components, i.e. significantly reduced HW in comparison to lockstep implementation and BIST implementation. Another advantage of embodiments is to avoid additional latency overheads as typically observed in case of Self-Test or STL methods while switching from one state of execution to the other state. In addition, in embodiments it is possible to have safety test integrated into the application, so there is no break in flow of operation, and to have safety checks optimized as per the hardware elements utilized by the function application. Likewise, embodiments offer a facilities-scalable HW safety assessment depending on the intended coverage, and the possibility of ensuring deterministic diagnostic coverage of even existing Hardware. In addition, embodiments offer the possibility to utilize existing hardware for safety critical functions, as well as test with no requirement to reset the device as may be required after a BIST operation due to a loss of state of internal registers. Further advantages are provided in the detailed description.

BRIEF DESCRIPTION OF THE DRAWINGS

The advantages of the methods and mechanisms described herein may be better understood by referring to the following description in conjunction with the accompanying drawings, in which:

FIG. 1 shows an example of a typical inference use case;

FIG. 2 shows steps of processing the nodes of an inference network;

FIG. 3 shows an example of a typical inference use case together with a checker network;

FIG. 4 shows steps of processing the nodes of an inference network together with a checker network;

and

FIG. 5 shows an example execution of checker network to detect hardware faults.

DETAILED DESCRIPTION OF IMPLEMENTATIONS

In the following description, numerous specific details are set forth to provide a thorough understanding of the methods and mechanisms presented herein. However, one having ordinary skill in the art should recognize that the various implementations may be practiced without these specific details. In some instances, well-known structures, components, signals, computer program instructions, and techniques have not been shown in detail to avoid obscuring the approaches described herein. It will be appreciated that for simplicity and clarity of illustration, elements shown in the figures have not necessarily been drawn to scale. For example, the dimensions of some of the elements may be exaggerated relative to other elements.

Systems, apparatuses, and methods for augmenting the functional safety of a safety-critical neural network application are disclosed herein. In one implementation, a system includes a safety-critical neural network application, a checker network, and an inference accelerator engine. The inference accelerator receives an input image or data set, test data (e.g., test vectors), and a neural network specification (e.g., layers and weights) for the safety-critical neural network application and the checker network. The disclosed approach may be used for (but is not restricted to) AI Inference, wherein a trained AI Neural Network (NN) is compiled to be executed on a dedicated processor, also known as an Accelerator.

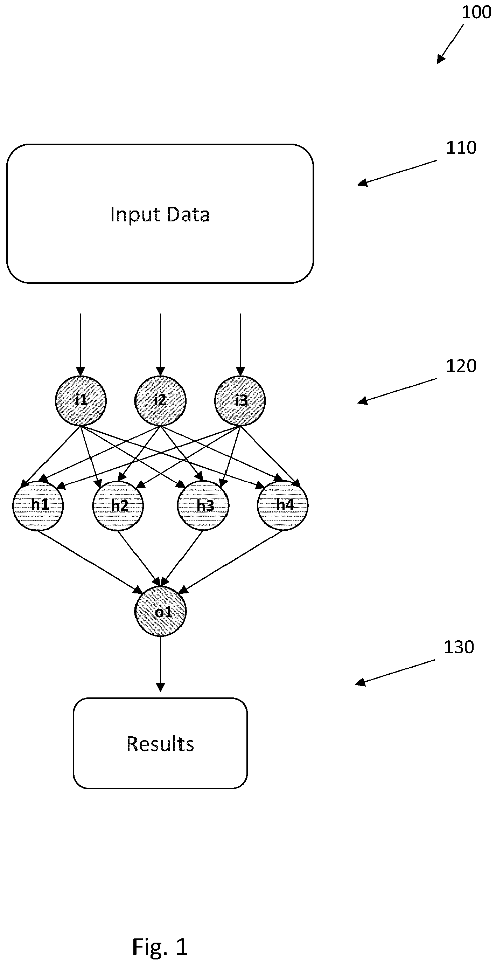

Referring now to FIG. 1, one implementation of a computing system for a typical use case with computational network 100 is shown. At runtime, the NN binary 120 (including the model graph, weights and parameters) is executed on the hardware (typically in a statically scheduled manner), where an input layer expects input data 110 provided from a sensor, e.g. a camera, the results of the first layer are used as input to the hidden layer or hidden layers, to an output layer, to then finally obtain the output of the application. This can be denoted as follows:

$$y = f(i);$$

where i is input from a sensor, f(.) is the non-linear NN model, and y is the output. In embodiments, the input data 110 may be RGB or YUV camera data, or other sensor data, or any data used as input for an application network. The output data or results of performing the application network on the input data is at 130. This may be an object list, or tagged data, or any other results of performing the application.

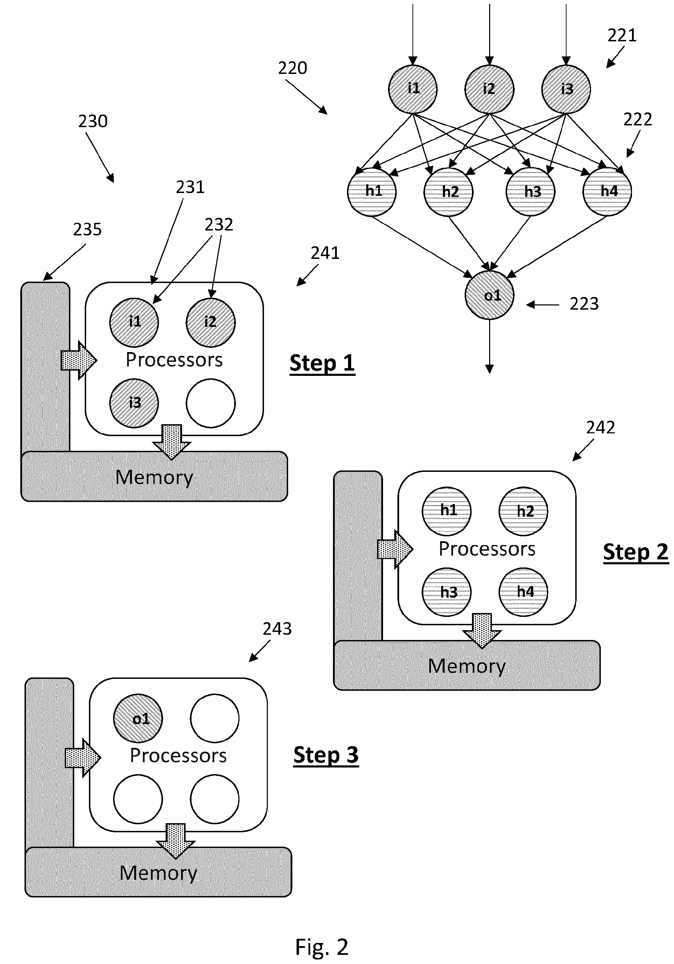

Turning to Figure 2, the steps of applying or executing the neural network specification 220 on the inference accelerator engine 230 are shown. In implementations, the inference accelerator engine may comprise a plurality of processors and memory. The memory is coupled to the processors such that input data may be provided to the processors and output data from the processors to the memory. The transfers of input data and output data may occur simultaneously, or sequentially, or both.

A block diagram of one implementation of a safety-critical inference application 220 executing in a safety-critical system 230 is shown. In one implementation, safety-critical system 230 includes processors block 231 with multiple processing units 232 which are representative of any number and type of processing units. It is noted that safety-critical system 200 can also include any number of other components which are not shown to avoid obscuring the figure. In one implementation, processors block 231 includes one or more central processing units (CPUs). In other implementations, processors block 231 can include other types of processing units or processors. In one implementation, processors block 231 include one or more graphics processing unit (GPUs). In other implementations, processing unit(s) 210 can include other types of processing units (e.g., digital signal processors (DSPs), field programmable gate arrays (FPGAs), application specific integrated circuits (ASICs)).

The processors of the inference engine in embodiments may comprise a plurality of identical processors, i.e. a homogenous system. In other embodiments, the processors may be heterogeneous, i.e. individual processors have varying capabilities. Example processors could be Vector Processors, Multiply-Accumulate (MAC) array, hard-wired mathematical functions like matrix transformations, ReLU, other combinational circuits, etc. The different capabilities may be unique, i.e. only one processor has a given capability. The different capabilities may be repeated, i.e. multiple processors have a given capability. There may be a mix of capabilities which are unique and which are repeated.

In implementations, inference accelerator engine 230 implements one or more layers of a convolutional neural network. For example, in this implementation, inference accelerator engine 230 implements one or more convolutional layers and/or one or more fully connected layers. When executing the application 220, the nodes of the application network specification include an input layer 221, a hidden layer 222, and an output layer 223. In another implementation, inference accelerator engine 230 implements one or more layers of a recurrent neural network. In example applications, an "inference engine" or "inference accelerator engine" may be defined as hardware and/or software which receives image data and generates one or more label probabilities for the image data, but the inventive concept is contemplated for other applications too. In some cases, an "inference engine" or "inference accelerator engine" is referred to as a "classification engine" or a "classifier".

Inference accelerator engine 230 is utilized in any of a variety of different applications which vary according to the implementation. For example, in one implementation, inference accelerator engine 230 analyzes an image or video frame to generate one or more label probabilities for the frame. For example, potential use cases include at least eye tracking, object recognition, point cloud estimation, ray tracing, light field modeling, depth tracking, and others. For eye tracking use cases, probabilities generated by inference accelerator engine 230 are based on learned patterns, dwell, transition angles, blink, etc. In other implementations, inference accelerator engine 230 may be developed or trained or customized for other types of use cases.

Inference accelerator engine 230 can be used by any of a variety of different safety-critical applications which vary according to the implementation. For example, in one implementation, inference accelerator engine 230 is used in an automotive application. For example, inference accelerator engine 230 might control one or more functions of a self-driving vehicle (i.e., autonomous vehicle), driver-assist vehicle, or advanced driver assistance system. In other implementations, inference accelerator engine 230 is designed for or customized for other types of use cases. Depending on the implementation, the inference accelerator engine is used to implement a neural network which generates probabilities of classification results for various objects detected in an input image or video frame, predicting the path taken by certain objects in the field of view, planning the ideal path for itself (eg: for an autonomous vehicle), or understanding user commands or requests based on audio or text inputs, to name but a few examples.

Processor units or processors are representative of any number and type of processing units (e.g., central processing unit (CPU), graphics processing unit (GPU), digital signal processor (DSP), field programmable gate array (FPGA), application specific integrated circuit (ASIC)). In one implementation, some of the processing associated with inference accelerator engine 230 is performed by different units in the processor. Additionally, in embodiments, inference accelerator engine 230 is implemented so as to comprise a collection or set of any number and type of processing units and/or other types of processing elements. The memory subsystem may include any number and type of memory devices. For example, the type of memory in memory subsystem 235 can include high-bandwidth memory (HBM), non-volatile memory (NVM), Dynamic Random Access Memory (DRAM), Static Random Access Memory (SRAM), NAND Flash memory, NOR flash memory, Ferroelectric Random Access Memory (FeRAM), or others. Memory subsystem 235 is accessible by processors 232 of the processor block 231. The memory interfaces may be any number and type of I/O interfaces (e.g., peripheral component interconnect (PCI) bus, PCI-Extended (PCI-X), PCIE (PCI Express) bus, Gigabit Ethernet (GBE) bus, universal serial bus (USB)).

In various implementations, the entirety of the inference accelerator 230 or one or more portions thereof are integrated within a robotic system, self-driving vehicle, autonomous drone, surgical tool, or other types of mechanical devices or systems. It is noted that the number of components of computing system 230 varies from implementation to implementation. For example, in other implementations, there are more or fewer of each component than the number shown in FIG. 2. It is also noted that in other implementations, computing system 230 may include other components not shown in FIG. 2.

In one implementation, safety-critical inference application 220 executes on processing units 232 in the processor block 231. Safety-critical inference application 220 is representative of any type of software application that executes in a hazardous environment where safety is of high importance. For example, in one implementation, safety- critical inference application 220 controls a self-driving or driver-assisted automobile or other vehicle. In other implementations, safety-critical inference application 220 operates within a robot, as the auto-pilot control mechanism in an airplane, or as part of other systems in various challenging, high-risk environments.

In one implementation, a first portion of the application neural network executes on processing units 231 during a step 1 shown as 241. A second portion of the application executes on processing units 231 during a step 2 shown as 242. A third portion of the application neural network executes on processing units 231 during a step 3 shown as 243. In other implementations, the application may run on a single processor, or on a different set of processors. Inference accelerator 230 is representative of any combination of software and/or hardware that is used to implement one or more machine learning inference algorithms and/or machine learning inference models, as specified by a neural network 220. In one implementation, inference accelerator 230 is implemented using dedicated hardware (e.g., FPGA, ASIC, IP core). In another implementation, inference accelerator 230 includes software instructions that are designed to execute on processing units 232. In other implementations, inference accelerator 230 can be any suitable combination of software and/or hardware. In implementations, inference accelerator 230 operates according to a topology and weights or biases provided by the safety-critical inference application 220.

The inventive concept introduces a novel approach of integrating additional computations or nodes, we refer them as "Safety Nodes", into a system for processing a NN model or network. This forms a checker network which would also be the network shown as 120. Additionally, in local memory we propose to store sample input data, which provides checker network input, and the expected "golden" results to compare the checker output 130 when the checker input is provided as input to the checker network. This can be denoted as follows:

$$s = g(k);$$

where k is checker input, g(.) is function of Safety Nodes in the checker network and s is checker output.

In advantageous embodiments, these Safety Nodes are the computation types corresponding to those in the NN model, e.g. convolution, pooling, relu, etc. For example, a MAC operator of the accelerator shall be used for millions of operations of the NN model per input image, thus a Safety Node in this case might implement additional operation(s) to verify the MAC operator with known input data, and compare the result with a known output. Similarly, for other operators as well, they may be implemented as part of the checker network to perform safety checks of all possible hardware elements that are being used by the NN model. It should be noted that the size and dimensionality of the Safety Nodes and checker input may be expected to increase with increase in complexity of the NN model and the expected diagnostic coverage of the hardware.

In embodiments, the checker network receives input data and applies a neural network specification for a specified inference application. The checker network is verified by comparing the results with expected results. A mismatch in the results of the checker network may indicate faulty processing hardware.

As a result, the overall function includes the AI NN model expecting raw sensor data as input and the additional safety-check compute elements embedded into the model, expecting known data as input. It can be denoted as a modified version of the original equation:

$$y\_s = f\_s(i\_s);$$

where i_s is input (sensor data and safety blob)
f_s(.) is the function of NN model and safety nodes and
y_s is the output of NN model and safety output.

The approach in embodiments may not include any additional hardware elements to either perform redundant computations or implement BIST, nor does it necessitate any software test library for the processor.

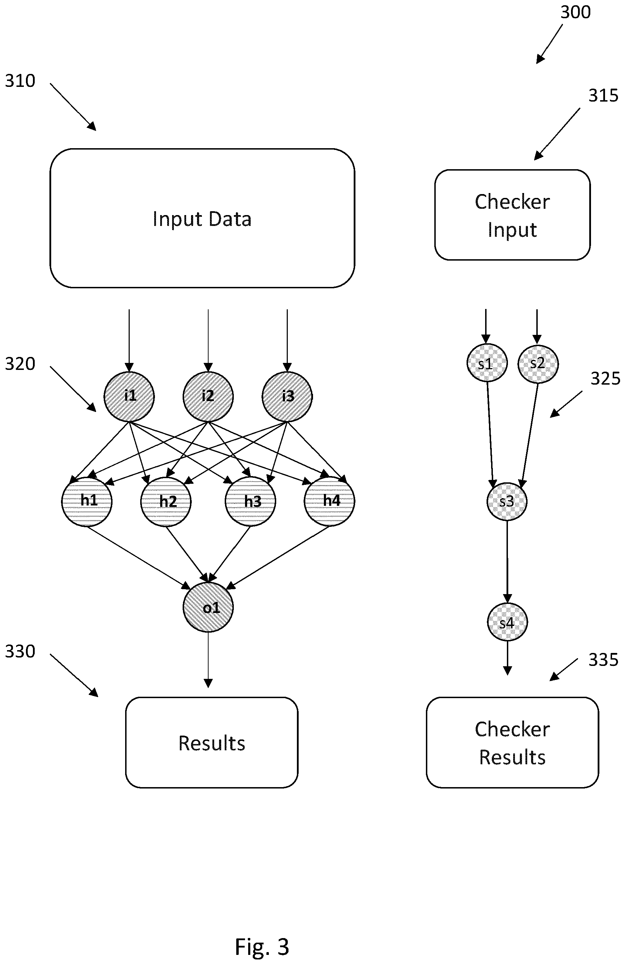

Referring now to FIG. 3, a block diagram of one implementation of an inference system with fault detection 300 is shown. In the implementation, system 300 comprises application network 320 and checker network 325. The checker network 325 comprises additional compute elements or nodes, which we may refer to as "Safety Nodes", in an NN model. Additionally, in local memory 235 of the accelerator 230, implementations may store sample input data, or checker input 315, and the expected or "golden" results when providing the checker input 315 as input to the checker network 325, as a known-good reference for the expected checker results 335. The Safety Nodes in advantageous implementations are the computation types or functions that exist in the application neural network 320, eg: convolution, pooling, ReLU, etc.

The inference accelerator hardware processes both the application network 320, taking application input data 310 to generate application results 330, and the checker network 325, taking checker input 315 to generate checker results 335. The checker results 335 are compared to known-good results. If the results differ, a fault is indicated.

In embodiments the neural network specification is applied to the input data and the checker network specification is applied to the checker input data simultaneously. In other embodiments, the neural network specification may be applied to the input data and the checker network specification applied to the checker input data sequentially. In yet other embodiments, there may be no synchronization or a more complex synchronization between when the neural network specification is applied to the input data and when the checker network specification is applied to the checker input data.

As mentioned previously, in embodiments the inference accelerator engine comprises multiple processors, and the network specifications comprise nodes, and the nodes of the application network specification and of the checker network specification are mapped to the processors. Thus the nodes may be mapped to different processors at different times.

The checker network 325 and checker input 315 may be selected to obtain maximal coverage of faults. Ideally, the combination of network and input data should cover 100% of the hardware, such as processors, memories and interfaces, which is used by the application network 320 for typical input data 310.

It may be the case that it is not possible to insure 100% coverage of faults. In implementations, the coverage may be maximized to approximate or approach 100%, or it may be raised to a maximum of 90% or 95% or some other value. Test coverage may be improved in an iterative process, where application input data is simulated or approximated, and the application network is applied. The checker network with checker input, for example the simulated or approximated application data, may be compared to the application network and input in terms of the fault coverage achieved when comparing the checker results to the expected or known-good results. Different combinations of checker input and/or checker network may be evaluated, and a combination with a higher or the highest fault coverage may be retained.

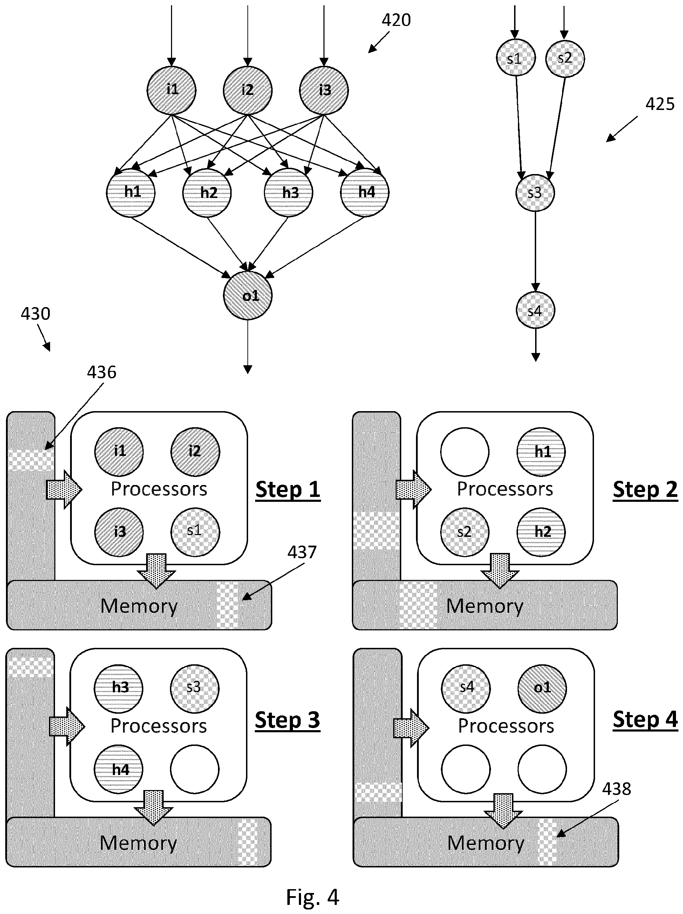

Turning to Figure 4, an implementation is shown of an inference accelerator 430 as used to process both an application network 420 and a checker network 425. Similar to Figure 2 the processing takes place on the inference accelerator 430 in multiple steps, where a part of the application network 420 and a part of the checker network 425 is run in Step 1, with the checker input provided from memory 436 and the intermediate output is stored in memory 437. Another part of both the networks 420 and 425 are run in Step 2, Step 3 and Step 4, until both the applications are completed and along with the output of the application network 420, the output of the checker network 425 is also generated as output 438. The corresponding checker output 438 is compared with the know expected output to detect hardware fault in the inference accelerator 430 as part of post-processing steps, typically on a different processor, for example CPU. A fault detection unit may exist to determine whether the checker network 425 has correctly processed the checker input. And the process is repeated from the beginning for the next set of input data.

The checker network 425 in this embodiment, including its architecture (i.e. types of computations and model graph), weights or parameters, input data and expected or known output data are defined statically, for example at a compile time. In embodiments, the checker network may be developed using among others the following criteria: (i) the application network 420, in the sense that the checker network 425 consists of the relevant computations types, parameter distribution, etc; (ii) input data to the application network, in the sense that the datatype and the range of computations can be determined; (iii) the safety goal of the system, in the sense that the criticality of detecting different types of hardware faults within a known interval of time can be applied, e.g. the Fault Tolerant Time Interval defined in ISO 26262, is understood, intended coverage of faults is evaluated (i.e. diagnostic coverage); and (iv) additional knowledge of the system.

The checker network may be refined by analyzing the coverage of functional units in the system. This might be done at the level of processing elements such as multipliers, or at the level of memory units, or at a level of transistors, or at any other level as appropriate. The resulting fault coverage estimation indicates how much or little of the execution of the application network with varying input data will actually be verified or checked for hardware faults.

In order to insure a high coverage of different functional units, advantageous embodiments may generate a checker network specification which is specifically adapted to the application network in that the nodes of an application neural network specification are classified by function, and at least one node for each function of the application neural network specification is included in the checker network specification. For example, if the application network includes 5 multiply nodes and 3 multiply-accumulate nodes and 1 standard deviation node, then the checker network should include at least one of each of those nodes. Other functions might include matrix transformations and ReLU.

In embodiments, the checker network may be a copy or a subset of the application network. In other embodiments, the essential computations or functions of the application network may be reflected in the checker network. In embodiments, the checker network specification may include nodes or functions which are supplemental functions to increase the coverage of the hardware.

For example, in embodiments the checker network 425 may be a single network (or model graph) as shown in the figure, including potentially different types of computations and including different hardware nodes to generate a single output to compare against a known output. In another implementation, the checker network 425 may be a combination of multiple graphs, with each graph including different computations on a single hardware element or node. In another implementation, the checker network 425 may be a combination of multiple graphs, with each graph including similar computations on multiple hardware nodes or elements. In another implementation, the checker network 425 may be a combination of the above-mentioned implementations.

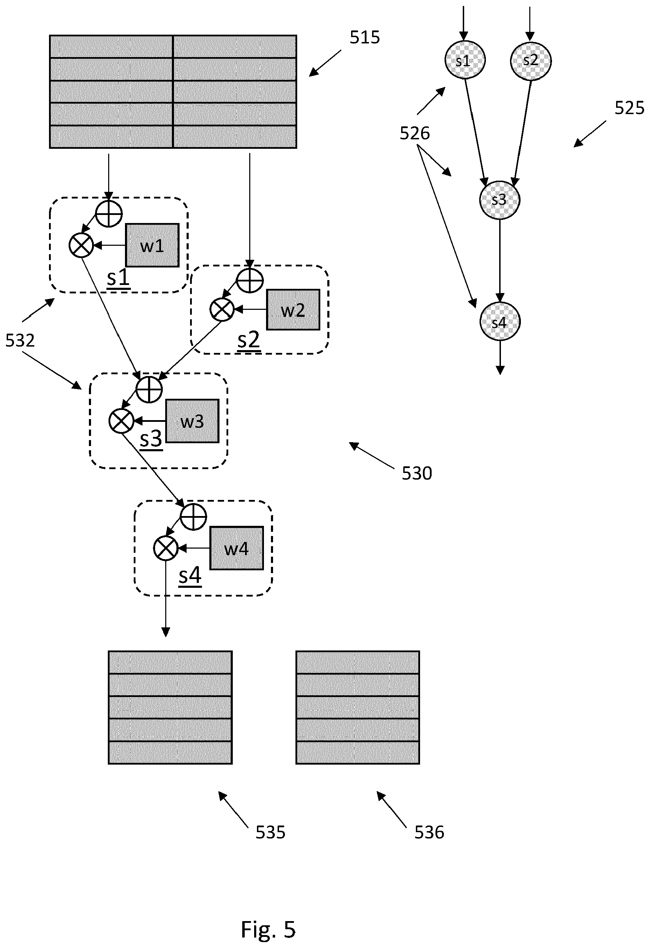

Turning to Figure 5, an implementation is shown of the data processing of the checker network 525, based on checker input 515 to generate the checker output 535 to be able to compare with the known-good output 536. The checker network as dataflow graph 530 takes input from the checker input 515, where the nodes 526 of the checker network 525 are mapped to processing units on the hardware 532 for the processing to be carried out in a deterministic predefined manner. In this particular implementation, all the processing units 532 are shown as identical with a local register memory, an adder and a multiplier. In other implementations, each processing unit 532 may be a different compute element, with different combinational logic or hardware components. In case a single-point fault occurs in the hardware, the corresponding processing unit 532 will perform an erroneous calculation which would subsequently generate an incorrect result and can be detected using the known-good output 536. In case of normal execution, in embodiments the checker output 535 shall be exactly equal to the known output 536 and normal execution of the application can be continued without any halts or obstructions.

On the other hand, if the checker network output does not match the expected output, i.e. the data was processed erroneously, then in embodiments the safety framework may provide a fault indicator to a safety-critical application. In response to receiving the fault indicator, the safety-critical application indicates one or more corrective measures or starts a fault response method. For example, in one implementation, the safety-critical application terminates in response to receiving the fault indicator. In another implementation, in response to receiving the fault indicator, the safety-critical application generates the same frame to be reprocessed by the inference accelerator engine. In other implementations, the safety-critical application performs other actions in response to receiving the fault indicator. For example, in embodiments the fault indicator triggers the overall safety controller of the system or System-on-Chip ("SoC") to switch to a "Safe Mode" of operation, typically running a reduced set of functions, to guide the overall system to a predefined safe state.

The approach described can be used as a method of checking or verifying the operation of a system comprising an inference accelerator engine 230, an application neural network specification 320, 420, a checker network specification 325, 425, checker input data 315, and expected checker output data 335. First the inference accelerator receives an input image or data set 310 and applies the application neural network specification to the input data. Either sequentially or in parallel, the system applies the checker network specification to the checker input data, thus generating results 330 from the application neural network specification using the inference accelerator engine and generating results 335 from the checker network specification using the inference accelerator engine. In a final step of calculation, it is necessary to compare the results from the checker network specification with the expected checker output data. Should there be a mismatch, the inventive system in embodiments engages a fault response method if the results from the checker network specification do not match the expected checker output data.

The fault response method may include providing a signal from the safety-critical application to enter a failure-response mode, and a first response action in that mode is terminating the safety-critical application. The fault response method may include entering a potential failure mode with a first mismatch between checker results and expected results, and entering the failure-response mode with a further mismatch between checker results and expected results. The further mismatch may be a second or a subsequent mismatch, but in any event not the first mismatch.

The fault response method may include actions such as discarding certain results of calculations of the application network, or "rolling back" to a previous state, or repeating the calculations. The calculations of the safety-critical application may also be restarted, for example with all data that arrived after the last successful comparison of checker results without a mismatch. In other embodiments the fault response method may include a signal to enter into a limp-home mode, or to stop an autonomous driving operation and return operation to a human operator.

For purposes of discussion, the steps in implementations are shown in sequential order. However, it is noted that in various implementations of the described methods, one or more of the elements described are performed concurrently, in a different order than shown, or are omitted entirely. Other additional elements are also performed as desired. For example, it is contemplated that the steps may all execute in parallel, or that some may be sequential and some parallel. The frequency or processing rate of the checker network may be less or substantially less than that of the application network. For example, the application network may have 100 times the throughput of the checker network, depending on the failure or fault coverage level needed. The bandwidth or throughput of the checker network execution can be adapted to the criticality of detecting different types of hardware faults within a known interval of time, e.g. the Fault Tolerant Time Interval.

In one implementation of a method for a safety processor framework, a change of operating modes may occur. A safety processor in a safety-critical system with a safety-critical application and an inference accelerator engine starts up by operating in a first mode. In one implementation, if the safety processor detects a fault condition, then the safety processor switches to a second mode for processing additional checker data and/or using an additional checker network. It is noted that the "second mode" can also be referred to herein as a "safety mode". In one implementation, when operating in the second mode, the safety processor provides checker data and conveys the checker data to the inference accelerator engine for processing with an additional checker network. In this implementation, after the inference accelerator engine generates classification results for the additional data, the safety processor generates a confidence indicator based on an analysis of the checker results, with the confidence indicator representing a probability that a fault is present.

In various implementations, program instructions of a software application are used to implement the methods and/or mechanisms described herein. For example, program instructions executable by a general or special purpose processor are contemplated. In various implementations, such program instructions can be represented by a high-level programming language. In other implementations, the program instructions can be compiled from a high-level programming language to a binary, intermediate, or other form. Alternatively, program instructions can be written that describe the behavior or design of hardware. Such program instructions can be represented by a high-level programming language, such as C. Alternatively, a hardware design language (HDL) such as Verilog can be used. In various implementations, the program instructions are stored on any of a variety of non-transitory computer readable storage mediums. The storage medium is accessible by a computing system during use to provide the program instructions to the computing system for program execution. In embodiments, such a computing system may include one or more memories and one or more processors configured to execute program instructions.

It should be emphasized that the above-described implementations are only non-limiting examples of implementations. Numerous variations and modifications will become apparent to those skilled in the art once the above disclosure is fully appreciated. It is intended that the following claims be interpreted to embrace all such variations and modifications.

## Claims

1. A system comprising an inference accelerator engine 230, an application network specification 320, 420, a checker network specification 325, 425, checker input data 315, and expected checker output data 335,
   wherein the system is configured to:

   receive input data 310;
   apply the application network specification to the input data;
   apply the checker network specification to the checker input data;
   generate results 330 from the application network specification using the inference accelerator engine;
   generate results 335 from the checker network specification using the inference accelerator engine;
   compare the results from the checker network specification with the expected checker output data; and
   signal a fault if the results from the checker network specification do not match the expected checker output data.

2. The system of claim one wherein the application network specification corresponds to a safety-critical application or a safety-critical neural network application.

3. The system of a previous claim wherein the checker input data and the expected checker output data are provided at predefined intervals.

4. The system of claims 1 or 2 wherein the checker input data and/or the expected checker output data are stored in memory 235.

5. The system of a previous claim wherein the neural network specification is applied to the input data and the checker network specification is applied to the checker input data simultaneously.

6. The system of a previous claim wherein the inference accelerator engine comprises multiple processors, and the network specifications comprise nodes, and the nodes of the application network specification and of the checker network specification are mapped to the processors.

7. The system of any previous claim wherein the nodes are mapped to different processors at different times.

8. The system of any previous claim wherein the inference accelerator engine comprises heterogeneous processors.

**9.** A method of generating a checker network specification adapted and intended for use with the system of any previous claim, wherein the nodes of an application specification are classified by function, and at least one node for each function of the application network specification is included in the checker network specification.

**10.** A method of generating checker input data for the system of any of the claims 1 to 7, wherein the fault coverage achievable by applying two different checker input data sets to the checker network is measured, and the checker input data with the higher fault coverage is retained.

**11.** A method of checking or verifying the operation of a system comprising an inference accelerator engine 230, an application neural network specification 320, 420, a checker network specification 325, 425, checker input data 315, and expected checker output data 335, wherein the method comprises receiving an input image or data set 310, applying the application neural network specification to the input data, applying the checker network specification to the checker input data, generating results 330 from the application neural network using the inference accelerator engine, generating results 335 from the checker network using the inference accelerator engine, comparing the results from the checker network with the expected checker output data, and engaging a fault response method if the results from the checker network do not match the expected checker output data.

**12.** The method of claim 11 wherein the checker network is actively calculated simultaneously with the calculation of the application network.

**13.** The method of claims 11 or 12 wherein the fault response method comprises providing a signal from the safety-critical application to enter a second mode, and wherein a first response action in the second mode is terminating the safety-critical application or restarting the safety-critical application.

**14.** The method of claims 11 or 12 wherein the fault response method comprises entering a third mode with a first mismatch between checker results and expected results, and performing the method of claim 13 with a mismatch between checker results and expected results which is not the first mismatch.

**15.** The method of any of claims 11 to 14 wherein the fault response method comprises discarding certain results of calculations of the application network.

100

110

Input Data

120

i1  i2  i3

h1  h2  h3  h4

o1

130

Results

Fig. 1

Fig. 2

Fig. 3

420

425

430

436

i1 i2 i3

h1 h2 h3 h4

o1

s1 s2

s3

s4

437

i1 i2

Processors

i3 s1

**Step 1**

h1

Processors

s2 h2

**Step 2**

Memory

Memory

h3 s3

Processors

h4

**Step 3**

s4 o1

Processors

**Step 4**

438

Memory

Memory

Fig. 4

Fig. 5

Europäisches
Patentamt

European
Patent Office

Office européen
des brevets

# EUROPEAN SEARCH REPORT

**Application Number**

EP 21 19 0617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU LI ET AL: "DeepDyve: Dynamic Verification for Deep Neural Networks", ARXIV.ORG, CORNELL UNIVERSITY LIBRARY, 201 OLIN LIBRARY CORNELL UNIVERSITY ITHACA, NY 14853, 16 October 2020 (2020-10-16), XP081787934, DOI: 10.1145/3372297.3423338 * page 1 - page 11, right-hand column, paragraph 5 * | 1-15 | INV. G06N3/063 ADD. G06N3/04 G06F21/55 |
| A | SCHORN CHRISTOPH ET AL: "Efficient On-Line Error Detection and Mitigation for Deep Neural Network Accelerators", 17 August 2018 (2018-08-17), ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 205 - 219, XP047484251, ISBN: 978-3-540-74549-5 [retrieved on 2018-08-17] * page 205 - page 218, paragraph 1 * | 1-15 | |
| A,D | US 5 915 082 A (MARSHALL JOSEPH R [US] ET AL) 22 June 1999 (1999-06-22) * abstract; claims 1,2; figures 1-10 * * column 1, line 10 - column 11, line 41, last paragraph * | 1-15 | |
| | -/-- | | |

| | | |
|---|---|---|
| | | TECHNICAL FIELDS SEARCHED (IPC) |
| | | G06N G06F |

The present search report has been drawn up for all claims

| Place of search | Date of completion of the search | Examiner |
|---|---|---|
| The Hague | 1 February 2022 | Volkmer, Markus |

EPO FORM 1503 03.82 (P04C01)

**page 1 of 2**

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SCHORN CHRISTOPH ET AL: "Accurate neuron resilience prediction for a flexible reliability management in neural network accelerators", 2018 DESIGN, AUTOMATION & TEST IN EUROPE CONFERENCE & EXHIBITION (DATE), EDAA, 19 March 2018 (2018-03-19), pages 979-984, XP033333995, DOI: 10.23919/DATE.2018.8342151 [retrieved on 2018-04-19] * the whole document * | 1-15 | |
| A | ZHANG JIN ET AL: "Testing and verification of neural-network-based safety-critical control software: A systematic literature review", INFORMATION AND SOFTWARE TECHNOLOGY, ELSEVIER, AMSTERDAM, NL, vol. 123, 7 March 2020 (2020-03-07), XP086152544, ISSN: 0950-5849, DOI: 10.1016/J.INFSOF.2020.106296 [retrieved on 2020-03-07] * the whole document * | 1-15 | |
| A | US 2020/380383 A1 (KWONG TUNG CHUEN [CA] ET AL) 3 December 2020 (2020-12-03) * the whole document * | 1-15 | TECHNICAL FIELDS SEARCHED (IPC) |

The present search report has been drawn up for all claims

| Place of search | Date of completion of the search | Examiner |
|---|---|---|
| The Hague | 1 February 2022 | Volkmer, Markus |

EPO FORM 1503 03.82 (P04C01)

## ANNEX TO THE EUROPEAN SEARCH REPORT
## ON EUROPEAN PATENT APPLICATION NO.

EP 21 19 0617

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2022

| Patent document cited in search report | | Publication date | Patent family member(s) | | Publication date |
|---|---|---|---|---|---|
| US 5915082 | A | 22-06-1999 | US | 5915082 A | 22-06-1999 |
| | | | US | 6065135 A | 16-05-2000 |
| US 2020380383 | A1 | 03-12-2020 | US | 2020380383 A1 | 03-12-2020 |
| | | | WO | 2020240315 A1 | 03-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5915082 A

- WO 2011117155 A1